# FASCICULE DE BREVET EUROPEEN

(11) **EP 2 377 290 B1**
(45) Date de publication et mention de la délivrance du brevet: **27.07.2022**
(21) Numéro de dépôt: 09805736.7
(22) Date de dépôt: 17.12.2009
(51) Int. Cl.: H04L 67/56

(54) **PROCEDE ET DISPOSITIF DE TRANSFERT SECURISE DE DONNEES NUMERIQUES**
VERFAHREN UND EINRICHTUNG ZUM SICHEREN TRANSFER DIGITALER DATEN
METHOD AND DEVICE FOR SECURELY TRANSFERRING DIGITAL DATA

(30) Priorité: 18.12.2008 FR 0858790
(43) Date de publication de la demande: 19.10.2011
(73) Titulaire: Electricité de France, 75008 Paris (FR)
(72) Inventeur: TARRAGO, Arnaud, F-75014 Paris (FR); SITBON, Pascal, F-92320 Chatillon (FR); N'GUYEN, Pierre, F-92120 Montrouge (FR)
(74) Mandataire: Plasseraud IP
(86) Numéro de dépôt international: PCT/FR2009/052600
(87) Numéro de publication internationale: WO 2010/076514

(56) Documents cités:
- WO-A-00/16206
- WO-A-96/18253
- WO-A-03/079629
- FR-A- 2 828 358
- US-A- 5 832 228
- US-A1- 2005 033 988
- Netgear: "Digital Home Networking For Service Providers", , 23 September 2008 (2008-09-23), XP055730262, Retrieved from the Internet: URL:https://www.netgear.com/images/Digital _Home_WP_23Sept08_PublicVersion_medres_218 -8486.pdf [retrieved on 2020-09-14]
- Mohsenin Tinoosh: "Design and Evaluation of FPGA-Based Gigabit-Ethernet/PCI Network Interface Card", , 1 March 2004 (2004-03-01), page 1, XP055814642, RICE UNIVERSITY Retrieved from the Internet: URL:https://www.cs.rice.edu/CS/Architectur e/docs/msthesis-mohsenin.pdf [retrieved on 2021-06-16]

## Description

L'invention concerne le domaine du transfert sécurisé des données numériques.

La protection des réseaux de données est actuellement assurée par des dispositifs dont la sécurité repose sur leur sûreté d'implémentation et la bonne maîtrise des protocoles de communication. C'est le cas notamment des dispositifs « coupe-feu », des relais applicatifs ou des produits segmentant les réseaux (comme les produits VLAN, ou de norme 802.1Q), ainsi que des systèmes de détection et de prévention d'intrusion.

Plusieurs types d'architectures de sécurité peuvent exister. Dans les architectures très sécurisées, les interconnexions réseaux sont prohibées. Les échanges se font à l'aide d'éléments physiques que l'on rattache de système en système. Des dispositifs d'échange à un seul sens de communication existent mais leur fiabilité est limitée du fait du manque de flux de contrôle d'échange. C'est le cas des dispositifs à « diodes physiques » basés, pour la plupart, sur des technologies fibres optiques.

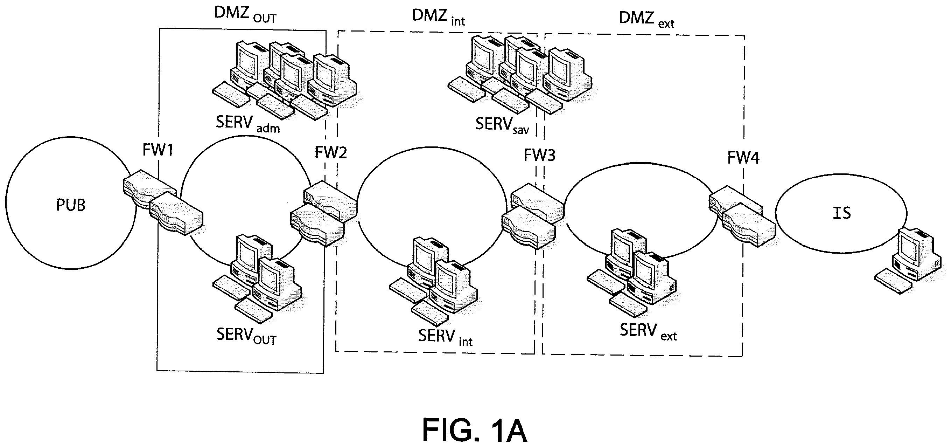

Un exemple d'architecture d'échange sécurisé idéale est illustré à la figure 1A. Dans le réseau représenté sur cette figure, l'accès au système informatique IS depuis un réseau de niveau de confiance différent, ici un réseau public PUB, se fait par l'intermédiaire de coupe-feux FW₁, FW₂, FW₃, FW₄ délimitant une zone d'échange externe DMZₒᵤₜ, une zone d'échange interne DMZᵢₙₜ et une zone d'échange étendue DMZₑₓₜ gérées respectivement par des serveurs dédiés SERVₒᵤₜ, SERVᵢₙ et SERVₑₓₜ. Des serveurs additionnels SERV_{adm} et SERVₛₐᵥ sont utilisés respectivement pour des opérations d'administration et de sauvegarde. La multiplication de ces zones d'échange permet de rendre plus complexe la tâche d'un éventuel utilisateur malfaisant voulant accéder à, voire corrompre, certaines données du système informatique IS.

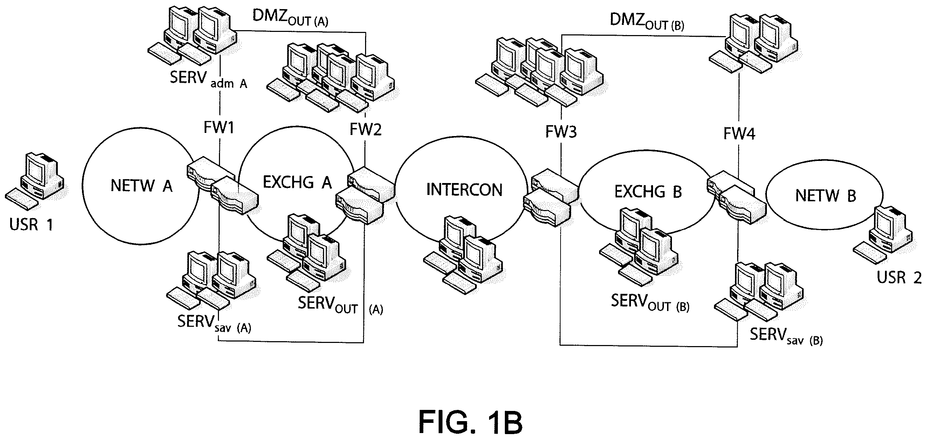

Un autre exemple d'architecture d'échange sécurisé « classique » est illustré à la figure 1B. Il reprend la notion de « zone d'échange » préalablement définie dans les architectures d'échanges « idéales », mais la simplifie à l'extrême pour n'avoir plus qu'une ou deux zones d'échange DMZₒᵤₜ (A) et DMZₒᵤₜ (B) .

Cependant, de nombreuses failles logicielles ont été révélées dans ce type d'architectures, entraînant alors la compromission du réseau qu'ils étaient censés protéger. Les architectures « idéales » ont, par exemple, été sensibles à des attaques sur les applications utilisant les web-services. Les architectures classiques sont, elles, sensibles à toute utilisation de canaux cachés (déclaration d'utilisation d'un protocole donné pour masquer une utilisation réelle d'un autre protocole ou d'un détournement de protocole) .

Indépendamment de ce problème de sûreté logicielle, une mauvaise application de la politique de sécurité d'une entreprise ou une erreur dans la configuration de tels dispositifs peuvent compromettre la sécurité du réseau entier. Ces erreurs nécessitent donc une surveillance et des procédures d'audits et de mise à niveau permanents de tels dispositifs.

La présente invention vient améliorer la situation.

Elle propose à cet effet un procédé de transfert sécurisé d'une donnée numérique, d'au moins un premier système informatisé vers au moins un deuxième système informatisé, comprenant un première étape de transfert de la donnée numérique provenant du premier système informatisé vers un moyen de contrôle d'un dispositif de transfert, puis une étape d'écriture de la donnée numérique reçue par le moyen de contrôle dans un moyen de stockage, une étape de lecture de la donnée numérique stockée dans le moyen de stockage par le moyen de contrôle , et une deuxième étape transfert, gérée indépendamment du premier transfert, de la donnée numérique depuis le moyen de contrôle vers le deuxième système informatisé.

Avantageusement, la première étape de transfert comporte une étape de transfert initial, gérée par au moins une première interface de transfert interne au dispositif de transfert, de la donnée numérique en provenance du premier système informatisé vers un premier moyen de traitement appartenant au dispositif de transfert, ainsi qu'une étape de transfert interne, gérée par une deuxième interface de transfert interne au dispositif de transfert, indépendante de ladite première interface de transfert interne, de la donnée numérique depuis le premier moyen de traitement vers le moyen de contrôle.

Ainsi, un éventuel utilisateur malveillant qui parviendrait à prendre le contrôle de la première interface n'aura pas directement le contrôle de la deuxième interface et ne pourra pas accéder aux données numériques stockées dans le dispositif.

De préférence, la première interface de transfert interne utilise une technologie de transfert différente de la deuxième interface de transfert interne.

Avec une telle différence d'implémentation technologique, on garantit le fait qu'un éventuel utilisateur malveillant parvenant à prendre le contrôle de la première interface n'obtient pas directement le contrôle de la deuxième interface.

Avantageusement, l'étape de transfert initial comporte une étape de transfert externe, gérée par une interface de transfert externe au dispositif de transfert, de la donnée numérique depuis le premier système vers un premier moyen d'échange appartenant au dispositif de transfert, suivie d'une étape de transfert interne, géré par la première interface de transfert interne au dispositif de transfert et indépendante de l'interface de transfert externe, de la donnée numérique depuis ledit premier moyen d'échange vers le premier moyen de traitement.

Ainsi, un éventuel utilisateur malveillant qui parviendrait à prendre le contrôle de l'interface externe n'aura pas directement le contrôle de la première interface et ne pourra pas accéder aux données numériques stockées dans le dispositif ou dans le deuxième système informatisé.

Préférentiellement, le deuxième transfert comporte une étape de transfert interne, gérée par une troisième interface de transfert interne au dispositif de transfert, de la donnée numérique en provenance du moyen de contrôle vers un deuxième moyen de traitement appartenant au dispositif de transfert, suivie d'une étape de transfert final, gérée par au moins une quatrième interface de transfert interne au dispositif de transfert et indépendante de ladite troisième interface de transfert interne, de la donnée numérique depuis ledit deuxième moyen de traitement vers le deuxième système informatisé.

Ainsi, un éventuel utilisateur malveillant qui parviendrait à prendre le contrôle de la troisième interface n'aura pas directement le contrôle de la quatrième interface et sera gêné dans sa prise de contrôle du dispositif de transfert.

Préférentiellement, la troisième interface de transfert interne utilise une technologie de transfert différente de la quatrième interface de transfert interne.

Avec une telle différence d'implémentation technologique, on garantit le fait qu'un éventuel utilisateur malveillant parvenant à prendre le contrôle de la troisième interface n'obtient pas directement le contrôle de la quatrième interface.

Avantageusement, l'étape de transfert final comporte une étape de transfert interne, géré par une quatrième interface de transfert interne au dispositif de transfert et indépendante de la troisième interface de transfert interne, de la donnée numérique depuis le deuxième moyen de traitement vers un deuxième moyen d'échange appartenant au dispositif de transfert, suivi d'une étape de transfert externe, géré par au moins une deuxième interface de transfert externe au dispositif de transfert, de la donnée numérique depuis ledit deuxième moyen d'échange vers le deuxième système informatisé.

Ainsi, un éventuel utilisateur malveillant qui parviendrait à prendre le contrôle de la quatrième interface de transfert interne n'aura pas directement le contrôle de l'interface de transfert externe et ne pourra pas accéder aux données situées dans le deuxième système informatisé.

De façon avantageuse, dans la mesure où la donnée numérique est constituée d'une pluralité de symboles, le procédé peut comprendre, soit entre le premier transfert et l'étape d'écriture, soit entre l'étape de lecture et le deuxième transfert, ou dans les deux cas, une étape de validation de la donnée. Une telle étape peut en outre avoir lieu au sein du premier transfert, entre l'étape de transfert initial et la deuxième étape de transfert interne. Elle peut aussi avoir lieu au sein du deuxième transfert, entre la troisième étape de transfert interne et l'étape de transfert final. Une telle étape de validation consiste à valider la donnée en fonction d'au moins un paramètre relatif à un des symboles de la donnée, ou en fonction d'un paramètre relatif à une métadonnée liée à cette donnée.

Cette étape de validation permet de vérifier que les données transmises à transférer ne sont pas manipulées par un utilisateur malveillant. Elle permet également de vérifier que les données transmises à transférer sont inoffensives vis à vis du système informatique cible ou qu'elles n'induisent pas de risque informatique sur le système cible.

Avantageusement, chaque interface de transfert ne peut effectuer que des opérations d'écriture ou de lecture de la donnée numérique.

En limitant ainsi les fonctionnalités des interfaces de transfert, on limite physiquement les échanges du dispositif avec les systèmes extérieurs, ce qui restreint les possibilités d'action d'un éventuel utilisateur malveillant ayant pris le contrôle d'une des interfaces du dispositif.

La présente invention vise aussi un dispositif de transfert sécurisé comprenant un moyen de contrôle, apte à être connecté à un moyen de stockage, un premier moyen de transfert, connecté au moyen de contrôle, apte à recevoir la donnée numérique en provenance du premier système informatisé et à la transmettre au moyen de contrôle, ainsi qu'un deuxième moyen de transfert, connecté au moyen de contrôle, apte à recevoir la donnée numérique du moyen de contrôle, pour la transmettre au deuxième système informatisé, et géré indépendamment du premier moyen de transfert.

Avantageusement, le premier moyen de transfert comprend un premier moyen de traitement, apte à recevoir la donnée numérique en provenance du premier système informatisé par le biais d'une première connexion gérée par une première interface de transfert interne, et connecté au moyen de contrôle au moyen d'une deuxième connexion gérée par une deuxième interface de transfert interne indépendamment de la première interface de transfert interne.

Le premier moyen de transfert peut aussi comprendre un premier moyen d'échange, connecté au premier moyen de traitement par le biais de la première connexion, et apte à recevoir la donnée numérique provenant du premier système informatisé par le biais d'une première interface de transfert externe, gérée indépendamment de la première interface de transfert interne.

De plus, le deuxième moyen de transfert comprend un deuxième moyen de traitement, connecté au moyen de contrôle au moyen d'une troisième connexion gérée par une troisième interface de transfert interne, et apte à envoyer la donnée numérique vers le deuxième système informatisé, par le biais d'une quatrième connexion gérée par une quatrième interface de transfert interne gérée indépendamment de la troisième interface de transfert interne.

Préférentiellement, le deuxième moyen de transfert comprend un deuxième moyen d'échange, connecté au deuxième moyen de traitement au moyen de la quatrième connexion, et apte à envoyer la donnée numérique vers le deuxième système informatisé par le biais d'une deuxième interface de transfert externe, gérée indépendamment de la quatrième interface de transfert interne.

Le dispositif de transfert sécurisé peut comporter soit un moyen de stockage, connecté au moyen de contrôle, soit un moyen de connexion, connecté audit moyen de contrôle et apte à être connecté à un moyen de stockage externe au dispositif de transfert, afin d'y stocker la donnée numérique.

Avantageusement, le dispositif de transfert sécurisé peut comporter un premier interrupteur permettant de choisir entre au moins deux états de fonctionnement, le premier état de fonctionnement étant un état dans lequel le premier moyen de traitement n'est apte à recevoir la donnée que du premier moyen d'échange et à transmettre la donnée qu'au moyen de contrôle, et le deuxième état de fonctionnement étant un état dans lequel le premier moyen de traitement n'est apte à recevoir la donnée que du moyen de contrôle et à transmettre la donnée qu'au premier moyen d'échange.

Similairement, le dispositif peut comporter un deuxième interrupteur permettant de choisir entre au moins deux états de fonctionnement, le premier état de fonctionnement étant un état où le deuxième moyen de traitement n'est apte à recevoir une donnée que du deuxième moyen d'échange et à transmettre une donnée qu'au moyen de contrôle, et le deuxième état de fonctionnement étant un état où le deuxième moyen de traitement n'est apte à recevoir une donnée que du moyen de contrôle et à transmettre une donnée qu'au deuxième moyen d'échange.

Avec de tels interrupteurs, un utilisateur certifié peut décider du sens de lecture et d'écriture des données en fonction du contexte d'utilisation, ce qui ajoute un élément de sécurité supplémentaire.

La présente invention vise enfin un programme d'ordinateur pour la mise en œuvre du procédé tel que décrit ci-avant. Ce programme peut être téléchargeable via un réseau de télécommunication, destiné à être stocké dans une mémoire d'un dispositif de transfert, ou bien stocké sur un support mémoire destiné à coopérer avec un dispositif de transfert.

D'autres caractéristiques et avantages de l'invention apparaîtront à l'examen de la description détaillée ci-après, et des dessins annexés sur lesquels :
- les figures 1A et 1B présentent des exemples d'architecture d'échange sécurisé idéale et classique ;
- la figure 2 illustre un dispositif de transfert sécurisé selon un mode de réalisation de la présente invention ;
- la figure 3 illustre les étapes d'un procédé selon un mode de réalisation de la présente invention ; et
- les figures 4A, 4B et 4C illustrent des exemples d'architecture d'échange sécurisé utilisant le dispositif de transfert sécurisé selon un mode de réalisation de la présente invention.

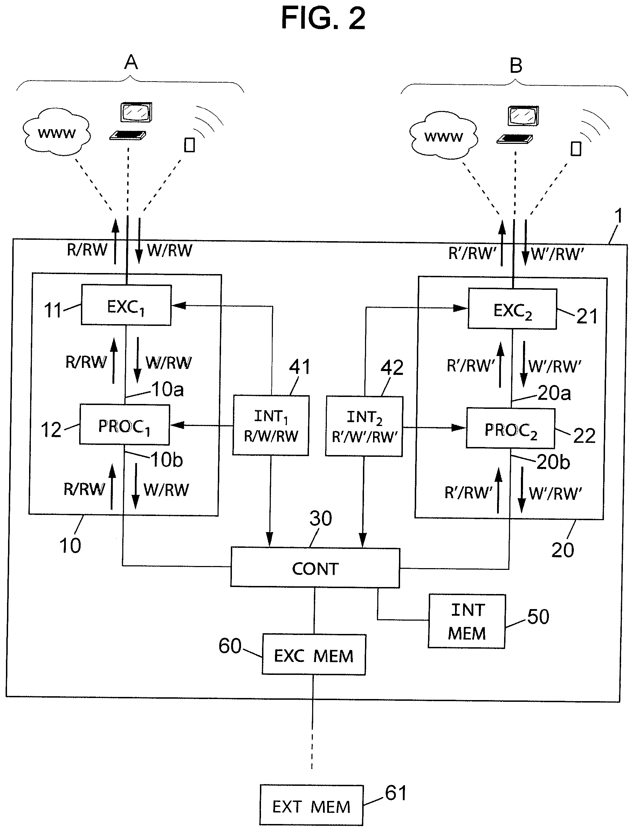

On se réfère maintenant à la **figure 2** sur laquelle est représenté un dispositif de transfert sécurisé 1. Ce dispositif est destiné à être connecté entre au moins un premier système informatisé A et un deuxième système informatisé B.

On entend ici par « système informatisé », tout système utilisant des données numériques, tels qu'un ordinateur, un smartphone, un assistant personnel (PDA), un actionneur, un réseau informatique ou un capteur, comme illustrés sur la figure 2.

Le dispositif 1 comprend un premier moyen de transfert 10 connecté à un moyen de contrôle 30, ainsi qu'un deuxième moyen de transfert 20 connecté lui-aussi au moyen de contrôle 30.

Le premier moyen de transfert 10 reçoit des données numériques provenant d'un premier système informatisé A, pour les transférer vers le moyen de contrôle 30. Le moyen de transfert 10 est ici présenté comme n'ayant qu'une seule interface d'entrée/sortie et ne pouvant être connecté qu'à un seul système informatisé A à la fois, pour simplifier la présentation de l'invention.

Cependant, le dispositif 1 peut aussi être conçu pour recevoir des données provenant de plusieurs systèmes informatisés. Dans ce cas, le moyen de transfert 10 peut être configuré pour pouvoir recevoir des données de ces différents systèmes, par le biais d'une pluralité d'interfaces d'entrée/sortie. Chacun de ces systèmes peut aussi disposer, au sein du dispositif 1, de son propre moyen de transfert, similaire au moyen de transfert 10, lui permettant de transférer des données vers le moyen de contrôle 30.

Similairement, le deuxième moyen de transfert 20 reçoit des données numériques provenant du moyen de contrôle 30, pour les transférer vers un deuxième système informatisé B, sur requête de ce système B. Ce moyen de transfert 20 est ici présenté comme participant au transfert des données vers un seul système informatisé B, pour des raisons de simplification.

Cependant, le dispositif 1 peut aussi être conçu pour transférer des données vers plusieurs systèmes informatisés. Dans ce cas, le moyen de transfert 20 peut être configuré pour pouvoir transférer des données vers ces différents systèmes par le biais d'une pluralité d'interfaces d'entrée/sortie, sur requête de ceux-ci. Chacun de ces systèmes peut aussi disposer, au sein du dispositif 1, de son propre moyen de transfert, similaire au moyen de transfert 20, lui permettant de recevoir des données provenant du moyen de contrôle 30.

Le premier moyen de transfert 10 et le deuxième moyen de transfert 20 sont gérés de façon indépendante l'un de l'autre, c'est-à-dire que le transfert d'une donnée numérique depuis le premier système informatisé A vers le deuxième système informatisé B se fait en deux temps. Dans un premier temps, le transfert se fait depuis le système A vers le moyen de contrôle 30. Dans un deuxième temps, cette donnée est transférée depuis le moyen de contrôle 30 vers le deuxième système informatisé B, sur requête de ce dernier. Cette désynchronisation physique entre les deux moyens de transfert 10 et 20 empêche une prise de contrôle malveillante simultanée de ces deux moyens de transfert, et permet une sécurisation de nature physique du transfert.

Le moyen de contrôle 30 sert d'interface entre les deux moyens de transfert 10 et 20, et permet de garantir l'indépendance de ceux-ci. Ce moyen de contrôle 30 peut être un composant électronique programmable au moyen d'un logiciel, comme par exemple un FPGA ou un ordinateur associé à un système d'exploitation, ou bien un composant électronique programmé physiquement, au moyen de câbles soudés, comme un composant ASIC par exemple.

Le moyen de contrôle 30 est connecté à au moins un moyen de stockage de données numériques, et permet de gérer l'accès à celui-ci, ainsi que le partage de son espace de stockage. Ce moyen de stockage peut être interne au dispositif 1, sous la forme d'une mémoire de stockage numérique 50, ou externe au dispositif 1, auquel cas le dispositif 1 comprend une interface 60 pouvant être connectée à un espace de stockage 61. La présente invention ne se limite pas à un seul espace de stockage, il est tout à fait envisageable d'utiliser plusieurs espaces de stockages internes 50, ou plusieurs espaces de stockage externes 61, voire toute combinaison d'espaces de stockage internes 50 et externes 61.

Pour gérer l'accès au moyen de stockage 50 ou 61, le moyen de contrôle 30 peut disposer d'un système d'exploitation embarqué, et avantageusement non modifiable par l'un des systèmes informatisés A ou B, permettant de modifier les droits d'écriture ou de lecture en fonction d'interrupteurs présentés ci-après. Cette gestion de l'accessibilité à la ressource mémoire permet de protéger celle-ci des actions malveillantes tentées depuis les moyens de traitement 12 et 22, par exemple.

De plus, l'écriture et la lecture de données par le moyen de contrôle 30 sur un moyen de stockage permet de garantir la désynchronisation physique entre les deux moyens de transfert 10 et 20, la donnée à transférer devant être d'abord stockée en mémoire, puis lue, avant d'être transférée par le deuxième moyen de transfert 20, sur requête du système B. Ceci complique la prise de contrôle du système informatisé B à partir d'un éventuel système informatisé A utilisé de façon malveillante.

Le moyen de transfert 10 comprend un premier moyen d'échange 11 connecté à un premier moyen de traitement 12 par une connexion 10ₐ. Ce premier moyen de traitement 12 est lui-même connecté au moyen de contrôle 30 au moyen d'une connexion 10_{b}. Il peut éventuellement être connecté à une mémoire afin d'obtenir un mécanisme de désynchronisation physique similaire à celui du moyen de contrôle 30, par l'écriture suivie de la lecture de la donnée à transférer.

Le premier moyen d'échange 11 sert à se connecter au premier système informatisé A et présente un port physique qui peut être de type USB ou S-ATA, par exemple. En fonction du type de port physique employé, le moyen 11 comprendra un contrôleur de la technologie correspondante, ne permettant qu'un certain nombre limité de commandes définies. On peut figer ces commandes, de façon à ce qu'elles ne soient pas modifiables, en les implémentant physiquement au niveau du contrôleur. Avec un tel moyen 11, le premier système informatisé A, quand il sera connecté au dispositif 1, aura l'impression d'accéder à un espace de stockage et n'aura pas connaissance de l'existence du deuxième système informatisé B.

Le premier moyen de traitement 12, à l'instar du moyen de contrôle 30, peut être un composant électronique programmable au moyen d'un logiciel, comme par exemple un FPGA ou un ordinateur associé à un système d'exploitation, ou bien un composant électronique programmé physiquement, au moyen de câbles soudés, comme un composant ASIC par exemple.

Ce moyen de traitement 12 va recevoir les données numériques depuis le moyen d'échange 11 par une connexion physique 10ₐ, comme par exemple un bus mémoire, gérée par une interface de transfert interne d'un certain type.

Le premier moyen de traitement 12 peut effectuer la validation des données numériques, selon certains critères décrits plus loin, et empêcher les données numériques d'être transférées plus avant dans le dispositif 1, si ces critères de validation ne sont pas remplis.

Dans une première alternative, si les critères de validation ne sont pas remplis, le premier moyen de traitement 12 peut permettre le transfert des données numériques en modifiant ces données, et éventuellement les métadonnées associées, pour les rendre inoffensives.

Dans une autre alternative, toujours si les critères de validation ne sont pas remplis, le premier moyen de traitement 12 peut permettre le transfert sans modification des données numériques, en indiquant au système informatisé B destinataire de ces données que celles-ci ne satisfont pas aux critères.

Le premier moyen de traitement 12 est connecté au moyen de contrôle 30 par une connexion physique 10_{b}, par exemple un bus mémoire, gérée par une interface interne de transfert d'un certain type, comme par exemple une interface USB, IDE, S-ATA ou Flash par exemple. Avantageusement, le type d'interface utilisée ici est différent de celui de l'interface entre le premier moyen d'échange 11 et le premier moyen de traitement 12, afin d'empêcher une action malveillante compatible avec seulement ce type d'interface de transfert. Pour cela, ces deux interfaces de transfert doivent agir de façon indépendante. On peut par exemple réaliser ceci en implémentant physiquement ces interfaces avec des technologies différentes, comme par exemple des technologies d'interface USB, IDE, S-ATA ou Flash par exemple.

Le deuxième moyen de transfert 20 va servir à transférer la donnée numérique depuis le moyen de contrôle 30 vers le deuxième système informatisé B. Ce moyen de transfert 20, équivalent symétrique du premier moyen de transfert 10, peut réaliser certaines ou toutes les fonctions du premier moyen de transfert 10, et intègre un deuxième moyen d'échange 12 et un deuxième moyen de traitement 22 à cet effet. Les connexions physiques 20ₐ et 20_{b} reliant les moyens 12,22 et 30 suivent les mêmes principes que celles du premier moyen 10. De même, le deuxième moyen de traitement 22 peut être réalisé de façon similaire au premier moyen de traitement 12 et peut effectuer les mêmes opérations que celui-ci.

Le moyen de contrôle 30 peut écrire ou lire les données provenant d'un des moyens de contrôle 12 ou 22. Le sens de lecture ou d'écriture peut être défini par des interrupteurs 41,42, et est indiqué par les états de fonctionnement R,W, respectivement R',W', sur la figure 2. Ces interrupteurs servent à changer les droits d'écriture des différents moyens de contrôle et de traitement 21,22 et 30, afin d'imposer un sens de transfert de la donnée numérique.

Dans l'exemple présent, on peut régler l'interrupteur 41 dans un premier état W, pour que le moyen d'échange 11 ne puisse que lire les données provenant du système informatisé A, pour que le moyen de traitement 12 ne puisse que lire les données depuis le moyen d'échange 11, et pour que le moyen de contrôle 30 ne puisse lire que les données provenant du moyen de traitement 12, afin de les écrire dans un espace de stockage 50 ou 61. Similairement, on peut régler l'interrupteur 42 dans un état R' pour que le moyen de traitement 22 ne puisse que lire les données depuis le moyen de contrôle 30 et pour que le moyen d'échange 21 ne puisse que lire les données depuis le moyen de traitement 22 et les envoyer vers le deuxième système informatisé B, si celui-ci le requiert

On définit ainsi, par le biais de la manipulation des interrupteurs 41 et 42, le sens de transfert des données tout en empêchant toute autre opération, ce qui apporte un degré de sécurité supplémentaire.

A l'inverse, si on veut cette fois transférer les données dans l'autre sens, on peut régler l'interrupteur 42 dans un deuxième état W', pour que le moyen d'échange ne puisse que lire les données en provenance du système informatisé B, pour que le moyen de traitement 22 ne puisse que lire les données depuis le moyen d'échange 21, et pour que le moyen de contrôle 30 ne puisse lire que les données provenant du moyen de traitement 22, afin d'écrire ces données dans un espace de stockage 50 ou 61. Similairement, on peut alors régler l'interrupteur 41 dans un état R pour que le moyen de traitement 12 ne puisse que lire les données depuis le moyen de contrôle 30 et pour que le moyen d'échange 11 ne puisse que lire les données depuis le moyen de traitement 12 et les envoyer vers le premier système informatisé A.

Enfin, il peut exister un troisième état RW, respectivement RW', pour l'interrupteur 41, respectivement 42, afin que celui-ci autorise chacun des moyens qu'il contrôle aussi bien à lire qu'à écrire les données dans le sens qu'il entend. Si un opérateur place ces deux interrupteurs 41,42 dans les états RW et RW', la sécurité offerte par le réglage du sens de lecture est retirée, mais le dispositif reste protégé par les autres aspects décrits ci-avant.

Le fonctionnement de ce dispositif de transfert sécurisé va maintenant être explicité au moyen de son procédé de fonctionnement.

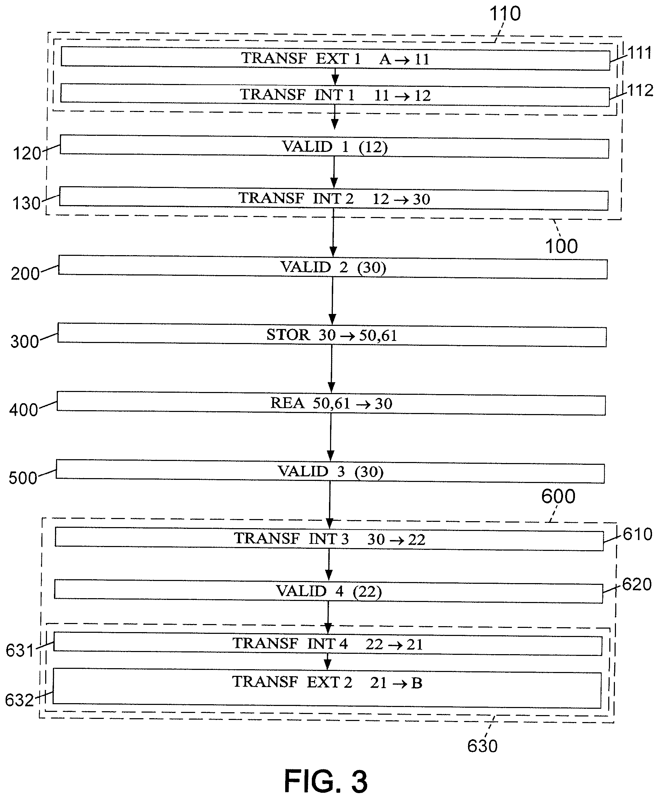

La **figure** 3 illustre les étapes d'un procédé selon un mode de réalisation de la présente invention.

Au cours d'une première étape 100 de transfert, une donnée numérique est transférée depuis un premier système informatisé A vers le moyen de contrôle 30 du dispositif de transfert sécurisé 1.

Cette étape 100 peut se décomposer en une étape de transfert initial 110, pendant laquelle la donnée numérique est transmise du premier système informatisé au premier moyen de traitement 12, suivie optionnellement d'une étape de validation de la donnée 120 au niveau du premier moyen de traitement 12, puis d'une étape de transfert interne 130, pendant laquelle la donnée numérique est transmise du premier moyen de traitement 12 au moyen de contrôle 30.

L'étape de transfert initial 110 peut elle-même se décomposer en une étape de transfert externe 111, pendant laquelle la donnée numérique est transmise du premier système informatisé A au premier moyen d'échange 11 du dispositif 1, suivie d'une étape de transfert interne 112, pendant laquelle la donnée numérique est transmise du moyen d'échange 11 au premier moyen de traitement 12.

Après cette première étape de transfert 100, une étape de validation 200 de la donnée numérique peut avoir lieu au niveau du moyen de contrôle 30.

S'ensuit une étape 300 d'écriture de la donnée numérique dans un moyen de stockage tel qu'un moyen 50 interne au dispositif 1, ou un moyen 61 externe au dispositif 1.

Une fois la donnée stockée en mémoire, elle est ensuite lue par le moyen de contrôle 30, au cours d'une étape 400, sur requête du système destiné à recevoir cette donnée, ici le système informatisé B en l'occurrence.

Après cette étape de lecture 400, une étape de validation 500 de la donnée numérique peut encore avoir lieu au niveau du moyen de contrôle 30.

Enfin, une autre étape de transfert 600 a lieu, pendant laquelle la donnée numérique est transférée depuis le moyen de contrôle 30 vers un deuxième système informatisé B.

Cette étape 600 peut se décomposer en une étape de transfert interne 610, pendant laquelle la donnée numérique est transférée du moyen de contrôle 30 au deuxième moyen de traitement 22, suivie optionnellement d'une étape 620 de validation de la donnée au niveau du deuxième moyen de traitement 22, puis d'une étape de transfert final 630, pendant laquelle la donnée numérique est transmise du deuxième moyen de traitement 22 au deuxième système informatisé B.

L'étape de transfert final 630 peut elle-même se décomposer en une étape de transfert interne 631, pendant laquelle la donnée numérique est transmise du deuxième moyen de traitement 22 au deuxième moyen d'échange 21 du dispositif 1, suivie d'une étape de transfert externe 632, pendant laquelle la donnée numérique est transmise du deuxième moyen d'échange 21 au deuxième système informatisé B.

Chacun des différents transferts intermédiaires 111, 112, 130, 610, 631 et 632 décrits précédemment est géré par le biais d'une interface d'un type particulier. Une première idée de la présente invention est de choisir des interfaces de type différent, par exemple en utilisant une technologie d'implémentation physique différente, afin d'éviter qu'un utilisateur malveillant, ayant pris le contrôle du premier système informatisé, puisse attaquer le deuxième système informatisé à partir de celui-ci, ou puisse se servir du même type de vulnérabilité.

Le fait d'utiliser de telles interfaces de natures différentes fera que chaque élément du dispositif 1 ne verra que les éléments qui lui sont voisins, et pas les autres éléments, ce qui augmente la sécurité car chaque élément du dispositif 1 ne connaît pas celui-ci dans sa globalité.

Ainsi, par exemple, le moyen d'échange 11 ne connait que l'existence de la connexion 10a et de la connexion au système informatisé A. Ce moyen 11 ne voit pas les autres éléments 12, 30, 22 et 21. Il ne fait que passer les données reçues du système A vers la connexion 10a, qui est un bus mémoire par exemple, et peut éventuellement être informé par celle-ci du transfert réussi ou non de ces données, sans avoir accès à plus de détail.

Pour éviter que l'utilisateur malveillant utilise les données transférées elles-mêmes pour attaquer le dispositif 1 et les autres systèmes informatisés, des étapes de validation 120, 200, 500 et 620 de la donnée numérique peuvent être prévues. Une telle étape de validation sert à vérifier un paramètre lié à la donnée et à n'autoriser la progression de celle-ci plus avant dans le sens de transfert que si cette vérification est positive.

Parmi les validations possibles, on peut par exemple envisager une validation basique de la donnée numérique en fonction d'au moins un paramètre relatif à au moins un desdits symboles de la donnée. En effet, toute donnée numérique sera constituée d'une suite de plusieurs symboles choisis parmi un alphabet. On peut ici chercher à vérifier si les symboles de la donnée reçue correspondent aux symboles autorisés, ou si la donnée numérique contient un nombre bien défini de symboles. On peut aussi voir si les symboles de la donnée répondent à un motif défini au préalable, c'est-à-dire s'ils répondent à un format connu à l'avance.

La validation peut aussi consister à vérifier un des paramètres relatifs aux métadonnées de la donnée. On entend ici par métadonnée, toute donnée subordonnée à la donnée numérique. Ceci peut être, par exemple, le format de fichier de la donnée, le format du titre de fichier de la donnée, la taille du fichier, sa date de création et/ou de modification, son propriétaire, son répertoire d'origine, signature numérique du fichier, etc. La validation peut aussi intégrer une étape de chiffrement ou déchiffrement des données.

La donnée ne sera validée que si le ou les critères de validation définis dans l'un des moyens 12,22 ou 30 est respecté. Comme déjà indiqué précédemment, en cas de non-validation de la donnée, celle-ci ne pourra pas continuer son transfert dans un mode de réalisation particulier.

Dans une première alternative, en cas de non-validation de la donnée, la donnée numérique peut être modifiée, ainsi qu'éventuellement les métadonnées qui lui sont associées, afin de les rendre inoffensives.

Dans une deuxième alternative, en cas de non-validation de la donnée, la donnée numérique peut continuer son transfert sans être modifiée, mais alors le système informatisé B destinataire de cette donnée doit être informé que celle-ci ne satisfait pas aux critères de validation.

Les étapes de validation 120, 200, 500 et 620 peuvent être effectuées par les différents moyens 12, 22 et 30. Elles peuvent en outre consister en une seule, certaines, voire toutes les validations décrites précédemment, ou bien en une combinaison quelconque de ces validations, de façon indépendante les unes des autres.

Le fait d'utiliser plusieurs processus de validation de types différents, lors d'étapes de validation différentes 120, 200, 500 ou 620, peut renforcer la validation globale de la donnée numérique ou être mieux adapté suivant les utilisations du dispositif.

Comme déjà vu précédemment, les moyens 12,22 et 30 peuvent être implémentés similairement et effectuer des validations similaires. On peut cependant envisager, pour gagner en rapidité et en sécurité, d'utiliser pour les moyens de traitement 12 et 22 des composants disposant de moins de capacité que pour le moyen de contrôle 30, qui lui doit gérer dans tous les cas l'accès au moyen de stockage. Dans un tel cas, les moyens de traitement 12 et 22 peuvent se contenter d'effectuer les opérations de validations basiques décrites précédemment tandis que le moyen de contrôle pourra, lui, effectuer au moins une opération de validation relative à une ou plusieurs métadonnées de la donnée à transférer, par exemple.

Une autre idée de la présente invention est d'utiliser des interfaces simples et limitées à un ensemble de routines de bas niveau, telles que des opérations de lecture ou d'écriture. Un utilisateur malveillant ne pourra donc pas détourner l'interface elle-même pour parvenir à ces fins.

A cette fin, on peut décider qu'un ou certains des transferts 112, 130, 610 ou 631, voire tous ces transferts, soit gérés par une interface ne permettant qu'une liste de fonctions définies, telle que des opérations de lecture de donnée ou d'écriture de donnée, par exemple. Le sens de lecture ou d'écriture de chaque interface peut être commandé, le cas échéant, par le biais d'interrupteurs comme les interrupteurs 41 et 42 de la figure 2, afin de n'autoriser le transfert de données que dans un sens, du premier système informatisé au deuxième système informatisé par exemple. Un éventuel utilisateur malveillant, ayant pris le contrôle du premier système informatisé, sera ainsi incapable de récupérer des données confidentielles provenant du deuxième système informatisé.

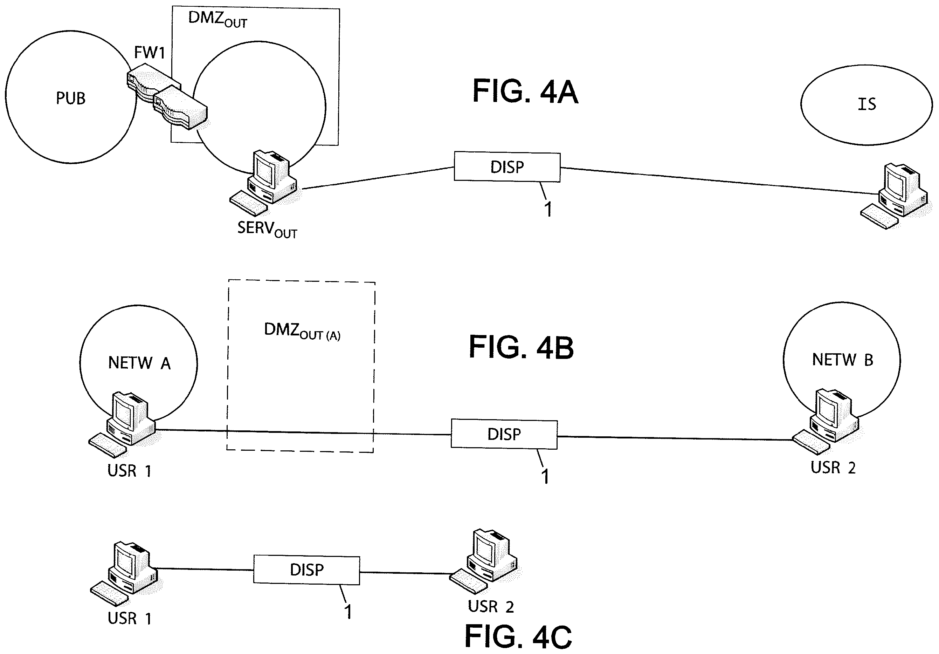

Les **figures 4A, 4B et 4C** illustrent l'avantage apporté par l'utilisation d'un dispositif de transfert sécurisé tel que décrit précédemment.

Par exemple, au lieu d'avoir une structure complexe à 3 zones telles que décrite dans le cas de l'architecture « idéale » de la figure 1A, avec tous les serveurs et les coupe-feux associés, le dispositif de transfert sécurisé 1 peut par exemple remplacer à lui tout seul la zone d'échange interne DMZᵢₙₜ et la zone d'échange étendue DMZₑₓₜ, tout en offrant un niveau de sécurisation au moins équivalent, ce qui constitue une simplification considérable de l'architecture de sécurisation, ainsi que de son exploitation. Une telle solution est présentée à la figure 4A.

Si l'on se place dans l'autre cas d'architecture « classique » de la figure 1B, où des zones d'échange respective DMZₒᵤₜ (A), DMZₒᵤₜ (B) servent à protéger deux utilisateurs USR1 et USR2, on peut très bien remplacer une de ces zones d'échange par un dispositif de la présente invention, par exemple la zone d'échange DMZₒᵤₜ(B) comme illustré par la figure 4B. On peut même envisager, dans un cas extrême, de se passer complètement de zone d'échange et de connecter directement les utilisateurs entre eux, par le biais du dispositif de la présente invention, comme illustré à la figure 4C.

Un autre avantage important de la solution proposée par la présente invention est la fonctionnalité « plug & play » du dispositif de l'invention, pouvant fonctionner avec tout type de système informatisé, indépendamment de leur configuration logicielle.

Bien entendu, la présente invention ne se limite pas à la forme de réalisation décrite ci-avant à titre d'exemple ; elle s'étend à d'autres variantes.

Encore une fois, on peut envisager de connecter un nombre quelconque de systèmes informatisés en entrée et en sortie du dispositif de transfert sécurisé, auquel cas les moyens d'échange 11,12 devront être adaptés en fonction du nombre respectif de systèmes informatisés en entrée et en sortie du dispositif de transfert 1.

La présente invention trouve avantageusement une application au transfert sécurisé de données dans des zones sensibles. Elle trouve par exemple une application intéressante, sans toutefois s'y limiter, au transfert de données collectées par des capteurs vers un système informatique de traitement de ces données.

Le dispositif de la présente invention peut aussi être utilisé en remplacement d'un transfert par clé USB ou par disquette, en apportant en plus un certain niveau de sécurité au niveau physique et un confort d'utilisation optimal, car il n'est pas besoin de faire des opérations manuelles de copie, de déplacement d'un support physique et de recopie, par exemple.

Enfin, le dispositif de la présente invention peut être utilisé pour la publication de données dans des zones avec des niveaux de sécurité différents.

Par exemple, on peut se servir du dispositif de l'invention pour transférer des données depuis une première zone de niveau de sécurité supérieur, par exemple des données prélevées par un capteur ou relatives à l'état de fonctionnement d'équipements sensibles, vers une deuxième zone de niveau de sécurité inférieur, voire une zone complètement ouverte au public, afin de publier ces données. Ceci pourra être fait sans que le système de la zone de niveau de sécurité inférieur n'ait accès au système de la zone de niveau de sécurité supérieur, grâce à la présente invention.

A l'inverse, le dispositif de la présente invention peut servir de « sas » de validation de données provenant d'une zone de niveau de sécurité inférieur et destinées à une zone de niveau de sécurité supérieur. Le dispositif va vérifier et valider les données et ne transmettra celles-ci vers la zone de niveau de sécurité supérieur que si ces données respectent les critères définis dans le dispositif.

## Revendications

1. Procédé de transfert sécurisé d'une donnée numérique, d'au moins un premier système informatisé vers au moins un deuxième système informatisé, comprenant les étapes suivantes :
- premier transfert (100) de la donnée numérique provenant du premier système informatisé vers un moyen de contrôle (30) d'un dispositif de transfert (1),
- écriture (300) de la donnée numérique reçue par le moyen de contrôle (30) dans un moyen de stockage (50,61),
- lecture (400) de la donnée numérique stockée dans le moyen de stockage (50,61) par le moyen de contrôle (30), et
- deuxième transfert (600), géré indépendamment du premier transfert, de la donnée numérique depuis le moyen de contrôle (30) vers le deuxième système informatisé, ledit deuxième transfert étant effectué sur requête dudit deuxième système informatisé,
**caractérisé en ce que** :
le moyen de contrôle (30) comprend un logiciel embarqué permettant de modifier des droits d'écriture ou de lecture en fonction d'interrupteurs, pour gérer un accès au moyen de stockage (50, 61), lesdits interrupteurs (41, 42) permettant d'autoriser le transfert de la donnée numérique dans un seul sens, du premier système informatisé au deuxième système informatisé, et
le premier transfert (100) comprenant :
- une première étape de transfert initial (110), gérée par au moins une première interface de transfert interne au dispositif de transfert (1), de la donnée numérique en provenance du premier système informatisé vers un premier moyen de traitement (12) appartenant au dispositif de transfert (1) ; et
- une deuxième étape de transfert interne (130), gérée par une deuxième interface de transfert interne au dispositif de transfert (1), indépendante de ladite première interface de transfert interne, de la donnée numérique depuis le premier moyen de traitement (12) vers le moyen de contrôle (30),

2. Procédé de transfert sécurisé selon la revendication 1, **caractérisé en ce que** la première étape de transfert initial (110) comprend :
- une première étape de transfert externe (111), géré par au moins une première interface de transfert externe au dispositif de transfert (1), de la donnée numérique depuis le premier système vers un premier moyen d'échange (11) appartenant au dispositif de transfert (1),
- une première étape de transfert interne (112), géré par une première interface de transfert interne au dispositif de transfert (1) et indépendante de ladite première interface de transfert externe, de la donnée numérique depuis ledit premier moyen d'échange (11) vers le premier moyen de traitement (12).

3. Procédé de transfert sécurisé selon l'une des revendications 1 ou 2, **caractérisé en ce que** le deuxième transfert (600) comprend :
- une troisième étape de transfert interne (610), gérée par une troisième interface de transfert interne au dispositif de transfert (1), de la donnée numérique en provenance du moyen de contrôle (30) vers un deuxième moyen de traitement (22) appartenant au dispositif de transfert (1), et
- une étape de transfert final (630), gérée par au moins une quatrième interface de transfert interne au dispositif de transfert (1) et indépendante de ladite troisième interface de transfert interne, de la donnée numérique depuis ledit deuxième moyen de traitement (22) vers le deuxième système informatisé.

4. Procédé de transfert sécurisé selon la revendication 3, **caractérisé en ce que** la troisième interface de transfert interne utilise une technologie de transfert différente de la quatrième interface de transfert interne.

5. Procédé de transfert sécurisé selon l'une des revendications 3 ou 4, **caractérisé en ce que** l'étape de transfert final (630) comprend :
- une quatrième étape de transfert interne (631), géré par une quatrième interface de transfert interne au dispositif de transfert (1) et indépendante de ladite troisième interface de transfert interne, de la donnée numérique depuis le deuxième moyen de traitement (22) vers un deuxième moyen d'échange (21) appartenant au dispositif de transfert (1), et
- une deuxième étape de transfert externe (632), géré par au moins une deuxième interface de transfert externe au dispositif de transfert (1), de la donnée numérique depuis ledit deuxième moyen d'échange (21) vers le deuxième système informatisé.

6. Procédé de transfert sécurisé selon l'une des revendications précédentes, dans lequel la donnée numérique est constituée d'une pluralité de symboles, **caractérisé en ce qu'**il comprend, entre la première étape de transfert initial (110) et la deuxième étape de transfert interne (130) et/ou entre le premier transfert (100) et l'étape d'écriture (300) et/ou entre l'étape de lecture (400) et le deuxième transfert (600) et/ou entre la troisième étape de transfert interne (610) et l'étape de transfert final (630), au moins une étape de validation (120,200,500,620) de la donnée en fonction d'au moins un paramètre relatif à au moins un desdits symboles de la donnée et/ou en fonction d'un paramètre relatif à au moins une métadonnée liée à ladite donnée.

7. Procédé de transfert sécurisé selon l'une des revendications précédentes, **caractérisé en ce que** chaque interface de transfert ne peut effectuer que des opérations d'écriture (W,W') et/ou de lecture (R,R') de la donnée numérique.

8. Dispositif de transfert sécurisé (1) d'une donnée numérique entre au moins un premier système informatisé (A) et au moins un deuxième système informatisé (B), comprenant :
- un moyen de contrôle (30), apte à être connecté à au moins un moyen de stockage (50,61).
- un premier moyen de transfert (10), connecté audit moyen de contrôle (30), apte à recevoir la donnée numérique en provenance du premier système informatisé (A) et à la transmettre au moyen de contrôle (30),
- un deuxième moyen de transfert (20) géré indépendamment dudit premier moyen de transfert (10), connecté audit moyen de contrôle (30), apte à recevoir la donnée numérique dudit moyen de contrôle (30), pour la transmettre au deuxième système informatisé (B) sur requête dudit deuxième système informatisé (B),
le dispositif étant configuré en outre pour écrire la donnée numérique reçue par le moyen de contrôle (30) dans un moyen de stockage (50,61),
le moyen de contrôle étant configuré en outre pour lire la donnée numérique stockée dans le moyen de stockage (50,61),
**caractérisé en ce que** :
le moyen de contrôle (30) comprend un lοgiciel embarqué permettant de modifier des droits d'écriture ou de lecture en fonction d'interrupteurs, pour gérer un accès au moyen de stockage (50, 61), lesdits interrupteurs (41, 42) permettant d'autoriser le transfert de la donnée numérique dans un seul sens, du premier système informatisé au deuxième système informatisé, et
le premier moyen de transfert (10) comprenant un premier moyen de traitement (12), apte à recevoir la donnée numérique en provenance du premier système informatisé (A) par le biais d'une première connexion (10ₐ) gérée par une première interface de transfert interne, et connecté au moyen de contrôle (30) au moyen d'une deuxième connexion (10_{b}) gérée par une deuxième interface de transfert interne indépendamment de ladite première interface de transfert interne,

9. Dispositif de transfert sécurisé (1) selon la revendication 8, **caractérisé en ce que** le premier moyen de transfert (10) comprend un premier moyen d'échange (11), connecté au premier moyen de traitement (12) au moyen de ladite première connexion (10ₐ), et apte à recevoir la donnée numérique provenant du premier système informatisé (A) par le biais d'une première interface de transfert externe, gérée indépendamment de ladite première interface de transfert interne.

10. Dispositif de transfert sécurisé (1) selon l'une des revendications 8 ou 9, **caractérisé en ce que** le deuxième moyen de transfert (20) comprend un deuxième moyen de traitement (22), connecté au moyen de contrôle (30) au moyen d'une troisième connexion (20_{b}) gérée par une troisième interface de transfert interne, et apte à envoyer la donnée numérique vers le deuxième système informatisé (B) par le biais d'une quatrième connexion (20ₐ), gérée par une quatrième interface de transfert interne indépendamment de ladite troisième interface de transfert interne.

11. Dispositif de transfert sécurisé (1) selon la revendication 10, **caractérisé en ce que** le deuxième moyen de transfert (20) comprend en outre un deuxième moyen d'échange (21), connecté au deuxième moyen de traitement (22) au moyen de ladite quatrième connexion (20a), et apte à envoyer la donnée numérique vers le deuxième système informatisé (B) par le biais d'une deuxième interface de transfert externe, gérée indépendamment de ladite quatrième interface de transfert interne.

12. Dispositif de transfert sécurisé selon l'une des revendications 8 à 11, **caractérisé en ce qu'**il comporte en outre au moins un moyen de connexion (60), connecté audit moyen de contrôle (30) et apte à être connecté à au moins un moyen de stockage (61) externe au dispositif de transfert (1) afin d'y stocker ladite donnée numérique.

13. Dispositif de transfert sécurisé selon l'une des revendications 9 à 12, **caractérisé en ce qu'**il comporte un premier interrupteur (41) permettant de choisir entre au moins deux états de fonctionnement (R,W), le premier état de fonctionnement (R) étant un état où le premier moyen de traitement (12) n'est apte à recevoir la donnée que du premier moyen d'échange (11) et à transmettre la donnée qu'au moyen de contrôle (30), et le deuxième état de fonctionnement (W) étant un état où le premier moyen de traitement (12) n'est apte à recevoir la donnée que du moyen de contrôle (30) et à transmettre la donnée qu'au premier moyen d'échange (11).

14. Dispositif de transfert sécurisé selon l'un des revendications 11 à 13, **caractérisé en ce qu'**il comporte un deuxième interrupteur (42) permettant de choisir entre au moins deux états de fonctionnement (R',W'), le premier état de fonctionnement (R') étant un état où le deuxième moyen de traitement (22) n'est apte à recevoir une donnée que du deuxième moyen d'échange (21) et à transmettre une donnée qu'au moyen de contrôle (30), et le deuxième état de fonctionnement (W') étant un état où le deuxième moyen de traitement (22) n'est apte à recevoir une donnée que du moyen de contrôle (30) et à transmettre une donnée qu'au deuxième moyen d'échange (21).

15. Programme d'ordinateur, pour la mise en œuvre du procédé selon l'une des revendications 1 à 7, téléchargeable via un réseau de télécommunication et/ou destiné à être stocké dans une mémoire d'un dispositif de transfert et/ou stocké sur un support mémoire destiné à coopérer avec un dispositif de transfert.

## Patentansprüche

1. Verfahren zur gesicherten Übertragung digitaler Daten von wenigstens einem ersten computergestützten System zu wenigstens einem zweiten computergestützten System, welches Verfahren die folgenden Schritte umfasst:
- eine erste Übertragung (100) der digitalen Daten, die von dem ersten computergestützten System stammen, zu einem Kontrollmittel (30) einer Übertragungsvorrichtung (1),
- Schreiben (300) der von dem Kontrollmittel (30) empfangenen digitalen Daten in ein Speichermittel (50, 61),
- Lesen (400) der in dem Speichermittel (50, 61) gespeicherten digitalen Daten durch das Kontrollmittel (30), und
- eine zweite, unabhängig von der ersten Übertragung verwaltete Übertragung (600) der digitalen Daten von dem Kontrollmittel (30) zu dem zweiten computergestützten System, wobei die zweite Übertragung auf Anfrage des zweiten computergestützten Systems durchgeführt wird,
**dadurch gekennzeichnet, dass**:
das Kontrollmittel (30) eine eingebettete Software umfasst, die es ermöglicht, Schreib- oder Leserechte in Abhängigkeit von Schaltern zu ändern, um den Zugriff auf das Speichermittel (50, 61) zu verwalten, wobei die Schalter (41, 42) ermöglichen, die Übertragung der digitalen Daten in einer einzigen Richtung von dem ersten computergestützten System zu dem zweiten computergestützten System zuzulassen, und
wobei die erste Übertragung (100) umfasst:
- einen ersten anfänglichen Übertragungsschritt (110), der von wenigstens einer ersten Übertragungsschnittstelle innerhalb der Übertragungsvorrichtung (1) verwaltet wird, zur Übertragung der digitalen Daten, die von dem ersten computergestützten System stammen, zu einem ersten Verarbeitungsmittel (12), das zur Übertragungsvorrichtung (1) gehört; und
- einen zweiten internen Übertragungsschritt (130), der von einer zweiten internen Übertragungsschnittstelle der Übertragungsvorrichtung (1) verwaltet wird, die von der ersten internen Übertragungsschnittstelle unabhängig ist, zur Übertragung der digitalen Daten von dem ersten Verarbeitungsmittel (12) zu dem Kontrollmittel (30).

2. Verfahren zur gesicherten Übertragung digitaler Daten nach Anspruch 1, **dadurch gekennzeichnet, dass** der erste anfängliche Übertragungsschritt (110) umfasst:
- einen ersten externen Übertragungsschritt (111), der durch wenigstens eine erste Übertragungsschnittstelle außerhalb der Übertragungsvorrichtung (1) verwaltet wird, zur Übertragung der digitalen Daten von dem ersten System zu einem ersten Austauschmittel (11), das zur Übertragungsvorrichtung (1) gehört,
- einen ersten internen Übertragungsschritt (112), der von einer ersten Übertragungsschnittstelle innerhalb der Übertragungsvorrichtung (1) verwaltet wird und unabhängig von der ersten externen Übertragungsschnittstelle ist, zur Übertragung der digitalen Daten von dem ersten Austauschmittel (11) zu dem ersten Verarbeitungsmittel (12).

3. Verfahren zur gesicherten Übertragung nach einem der Ansprüche 1 oder 2,
**dadurch gekennzeichnet, dass** die zweite Übertragung (600) umfasst:
- einen dritten internen Übertragungsschritt (610), der von einer dritten Übertragungsschnittstelle innerhalb der Übertragungsvorrichtung (1) verwaltet wird, zur Übertragung der digitalen Daten, die von dem Kontrollmittel (30) stammen, zu einem zweiten Verarbeitungsmittel (22), das zur Übertragungsvorrichtung (1) gehört, und
- einen finalen Übertragungsschritt (630), der von wenigstens einer vierten Übertragungsschnittstelle innerhalb der Übertragungsvorrichtung (1) und unabhängig von der dritten internen Übertragungsschnittstelle verwaltet wird, zur Übertragung der digitalen Daten von dem zweiten Verarbeitungsmittel (22) zu dem zweiten computergestützten System.

4. Verfahren zur gesicherten Übertragung nach Anspruch 3, **dadurch gekennzeichnet, dass** die dritte interne Übertragungsschnittstelle eine andere Übertragungstechnologie verwendet als die vierte interne Übertragungsschnittstelle.

5. Verfahren zur gesicherten Übertragung nach einem der Ansprüche 3 oder 4, **dadurch gekennzeichnet, dass** der finale Übertragungsschritt (630) umfasst:
- einen vierten internen Übertragungsschritt (631), der von einer vierten Übertragungsschnittstelle innerhalb der Übertragungsvorrichtung (1) verwaltet wird und unabhängig von der dritten internen Übertragungsschnittstelle ist, zur Übertragung der digitalen Daten von dem zweiten Verarbeitungsmittel (22) zu einem zweiten Austauschmittel (21), die zur Übertragungsvorrichtung (1) gehört, und
- einen zweiten externen Übertragungsschritt (632), der von wenigstens einer zweiten Übertragungsschnittstelle außerhalb der Übertragungsvorrichtung (1) verwaltet wird, zur Übertragung der digitalen Daten von dem zweiten Austauschmittel (21) zu dem zweiten computergestützte System.

6. Verfahren zur gesicherten Übertragung nach einem der vorhergehenden Ansprüche, wobei die digitalen Daten aus einer Vielzahl von Symbolen bestehen, **dadurch gekennzeichnet, dass** das Verfahren zwischen dem ersten anfänglichen Übertragungsschritt (110) und dem zweiten internen Übertragungsschritt (130) und/oder zwischen der ersten Übertragung (100) und dem Schreibschritt (300) und/oder zwischen dem Leseschritt (400) und der zweiten Übertragung (600) und/oder zwischen dem dritten internen Übertragungsschritt (610) und dem finalen Übertragungsschritt (630), wenigstens einen Schritt (120, 200, 500, 620) zur Validierung der Daten in Bezug auf wenigstens einen Parameter umfasst, der sich auf wenigstens eines der Symbole der Daten bezieht, und/oder in Bezug auf einen Parameter, der sich wenigstens auf mit den Daten verknüpfte Metadaten bezieht.

7. Verfahren zur gesicherten Übertragung nach einem der vorhergehenden Ansprüche, **dadurch gekennzeichnet, dass** jede Übertragungsschnittstelle nur Operationen zum Schreiben (W, W') und/oder Lesen (R, R') der digitalen Daten durchführen kann.

8. Vorrichtung zur gesicherten Übertragung (1) digitaler Daten zwischen wenigstens einem ersten computergestützten System (A) und wenigstens einem zweiten computergestützten System (B), umfassend:
- ein Kontrollmittel (30), das mit wenigstens einem Speichermittel (50, 61) verbunden werden kann,
- ein erstes Übertragungsmittel (10), das mit dem Kontrollmittel (30) verbunden ist und digitale Daten, die von dem ersten computergestützten System (A) stammen, empfangen und zu dem Kontrollmittel (30) übertragen kann,
- ein zweites Übertragungsmittel (20), das unabhängig von dem ersten Übertragungsmittel (10) verwaltet wird, mit dem Kontrollmittel (30) verbunden ist und die digitalen Daten von dem Kontrollmittel (30) empfangen kann, um sie auf Anfrage des zweiten computergestützten Systems (B) zu dem zweiten computergestützten System (B) zu übertragen,
wobei die Vorrichtung ferner dazu ausgebildet ist, die von dem Kontrollmittel (30) empfangenen digitalen Daten in ein Speichermittel (50, 61) zu schreiben, wobei das Kontrollmittel ferner dazu ausgebildet ist, die in dem Speichermittel (50, 61) gespeicherten digitalen Daten zu lesen,
**dadurch gekennzeichnet, dass**:
das Kontrollmittel (30) eine eingebettete Software umfasst, die es ermöglicht, Schreib- oder Leserechte in Abhängigkeit von Schaltern zu ändern, um den Zugriff auf die Speichermittel (50, 61) zu verwalten, wobei die Schalter (41, 42) ermöglichen, die Übertragung der digitalen Daten nur in einer Richtung von dem ersten computergestützten System zu dem zweiten computergestützten System zuzulassen, und
wobei das erste Übertragungsmittel (10) ein erstes Verarbeitungsmittel (12) umfasst, welches die digitalen Daten, die von dem ersten computergestützten System (A) stammen, über eine erste Verbindung (10ₐ), die von einer ersten internen Übertragungsschnittstelle verwaltet wird, empfangen kann und mit dem Kontrollmittel (30) über eine zweite Verbindung (10_{b}), die von einer zweiten internen Übertragungsschnittstelle verwaltet wird, unabhängig von der ersten internen Übertragungsschnittstelle verbunden ist.

9. Vorrichtung zur gesicherten Übertragung (1) nach Anspruch 8, **dadurch gekennzeichnet, dass** das erste Übertragungsmittel (10) ein erstes Austauschmittel (11) umfasst, das mit dem ersten Verarbeitungsmittel (12) über die erste Verbindung (10ₐ) verbunden ist und digitale Daten, die von dem ersten computergestützten System (A) stammen, über eine erste externe Übertragungsschnittstelle empfangen kann, die unabhängig von der ersten internen Übertragungsschnittstelle verwaltet wird.

10. Vorrichtung zur gesicherten Übertragung (1) nach einem der Ansprüche 8 oder 9, **dadurch gekennzeichnet, dass** das zweite Übertragungsmittel (20) ein zweites Verarbeitungsmittel (22) umfasst, das mit dem Kontrollmittel (30) über eine dritte Verbindung (20_{b}) verbunden ist, die von einer dritten internen Übertragungsschnittstelle verwaltet wird, und die digitalen Daten über eine vierte Verbindung (20ₐ), die von einer vierten internen Übertragungsschnittstelle unabhängig von der dritten internen Übertragungsschnittstelle verwaltet wird, zu dem zweiten computergestützten System (B) senden kann.

11. Vorrichtung zur gesicherten Übertragung (1) nach Anspruch 10, **dadurch gekennzeichnet, dass** das zweite Übertragungsmittel (20) ferner ein zweites Austauschmittel (21) umfasst, das über die vierte Verbindung (20ₐ) mit dem zweiten Verarbeitungsmittel (22) verbunden ist und die digitalen Daten über eine zweite externe Übertragungsschnittstelle, die unabhängig von der vierten internen Übertragungsschnittstelle verwaltet wird, zu dem zweiten computergestützten System (B) senden kann.

12. Vorrichtung zur gesicherten Übertragung nach einem der Ansprüche 8 bis 11, **dadurch gekennzeichnet, dass** sie ferner wenigstens ein Verbindungsmittel (60) umfasst, das mit dem Kontrollmittel (30) verbunden ist und mit wenigstens einem Speichermittel (61) außerhalb der Übertragungsvorrichtung (1) verbunden werden kann, um dort die digitalen Daten zu speichern.

13. Vorrichtung zur gesicherten Übertragung nach einem der Ansprüche 9 bis 12, **dadurch gekennzeichnet, dass** sie einen ersten Schalter (41) umfasst, mit dem zwischen wenigstens zwei Betriebszuständen (R, W) gewählt werden kann, wobei der erste Betriebszustand (R) ein Zustand ist, in dem das erste Verarbeitungsmittel (12) die Daten nur von dem ersten Austauschmittel (11) empfangen und nur zu dem Kontrollmittel (30) weiterleiten kann, und wobei der zweite Betriebszustand (W) ein Zustand ist, in dem das erste Verarbeitungsmittel (12) die Daten nur von dem Kontrollmittel (30) empfangen und die Daten nur an zu dem ersten Austauschmittel (11) weiterleiten kann.

14. Vorrichtung zur gesicherten Übertragung nach einem der Ansprüche 11 bis 13, **dadurch gekennzeichnet, dass** sie einen zweiten Schalter (42) umfasst, mit dem zwischen wenigstens zwei Betriebszuständen (R', W') gewählt werden kann, wobei der erste Betriebszustand (R' ) ein Zustand ist, in dem das zweite Verarbeitungsmittel (22) Daten nur von dem zweiten Austauschmittel (21) empfangen und nur zu dem Kontrollmittel (30) übertragen kann, und wobei der zweite Betriebszustand (W' ) ein Zustand ist, in dem das zweite Verarbeitungsmittel (22) Daten nur von dem Kontrollmittel (30) empfangen und nur zu dem zweiten Austauschmittel (21) senden kann.

15. Computerprogramm zur Durchführung des Verfahrens nach einem der Ansprüche 1 bis 7, das über ein Telekommunikationsnetz heruntergeladen werden kann und/oder dafür gedacht ist, in einem Speicher einer Übertragungsvorrichtung gespeichert und/oder auf einem Speichermedium gespeichert zu werden, das dafür gedacht ist, mit einer Übertragungsvorrichtung zusammenzuarbeiten.

## Claims

1. Method for securely transferring an item of digital data, from at least a first computer system to at least a second computer system, **characterized in that** it comprises the following stages:
- first transfer (100) of the digital data item originating from the first computer system to a control means (30) of a transfer device (1),
- writing (300) the digital data item received by the control means (30) in a storage means (50, 61),
- reading (400) the digital data item stored in the storage means (50, 61) by the control means (30), and
- second transfer (600), managed independently from the first transfer, of the digital data item from the control means (30) to the second computer system, the second transfer being performed on request of the second computer system,
**characterized in that**:
the control means (30) comprises an on-board software which enables changing reading or writing rights according to switches, to manage an access to the storage means (50, 61), the switches (41, 42) enabling to allow the transfer of the digital data item in a single direction, from the first computer system to the second computer system, and
the first transfer (100) comprising:
- a first initial transfer stage (110), managed by at least a first internal transfer interface of the transfer device (1), of the digital data item coming from the first computer system to a first processing means (12) belonging to the transfer device (1); and
- a second internal transfer stage (130), managed by a second internal transfer interface of the transfer device (1), independent from said first internal transfer interface, of the digital data item from the first processing means (12) to the control means (30).

2. Secure transfer method according to claim 1, **characterized in that** the first initial transfer stage (110) comprises:
- a first external transfer stage (111), managed by at least a first transfer interface outside of the transfer device (1), of the digital data item from the first system to a first exchange means (11) belonging to the transfer device (1),
- a first internal transfer stage (112), managed by a first internal transfer interface of the transfer device (1) and independent from said first external transfer interface, of the digital data item from said first exchange means (11) to the first processing means (12) .

3. Secure transfer method according to one of the claims 1 or 2, **characterized in that** the second transfer (600) comprises:
- a third internal transfer stage (610), managed by a third internal transfer interface of the transfer device (1), of the digital data item coming from the control means (30) to a second processing means (22) belonging to the transfer device (1), and
- a final transfer stage (630), managed by at least a fourth internal transfer interface of the transfer device (1) and independent of said third internal transfer interface, of the digital data item from said second processing means (22) to the second computer system.

4. Secure transfer method according to claim 3, **characterized in that** the third internal transfer interface uses a transfer technology which is different from the fourth internal transfer interface.

5. Secure transfer method according to one of claims 3 or 4, **characterized in that** the final transfer stage (630) comprises:
- a fourth internal transfer stage (631), managed by a fourth internal transfer interface of the transfer device (1) and independent from said third internal transfer interface, of the digital data item from the second processing means (22) to a second exchange means (21) belonging to the transfer device (1), and
- a second external transfer stage (632), managed by at least a second transfer interface outside of the transfer device (1), of the digital data item from said second exchange means (21) to the second computer system.

6. Secure transfer method according to one of the preceding claims, in which the digital data item is constituted by a plurality of symbols, **characterized in that** it comprises, between the first initial transfer stage (110) and the second internal transfer stage (130) and/or between the first transfer (100) and the writing stage (300) and/or between the reading stage (400) and the second transfer (600) and/or between the third internal transfer stage (610) and the final transfer stage (630), at least one stage of validation (120, 200, 500, 620) of the data item according to at least one parameter relative to at least one of said symbols of the data item, and/or according to a parameter relative to at least one item of metadata relating to said data item.

7. Secure transfer method according to one of the preceding claims, **characterized in that** each transfer interface can carry out only writing (W, W') or reading (R, R') operations of the digital data item.

8. Device (1) for securely transferring an item of digital data between at least a first computer system (A) and at least a second computer system (B), comprising:
- a control means (30), capable of being connected to at least one storage means (50, 61),
- a first transfer means (10), connected to said control means (30), capable of receiving the digital data item coming from the first computer system (A) and of transmitting it to the control means (30),
- a second transfer means (20) managed independently from said first transfer means (10), connected to said control means (30), capable of receiving the digital data item from said control means (30), in order to transmit it to the second computer system (B) on request of the second computer system (B), the device being further configured to write the digital data item received by the control means (30) in a storage means (50, 61),
the device being further configured to read the digital data item stored in the storage means (50, 61), **characterized in that**:
the control means (30) comprises an on-board software which enables changing reading or writing rights according to switches, to manage an access to the storage means (50, 61), the switches (41, 42) enabling to allow the transfer of the digital data item in a single direction, from the first computer system to the second computer system, and
the first transfer means (10) comprising a first processing means (12), capable of receiving the digital data item coming from the first computer system (A) via a first connection (10ₐ) managed by a first internal transfer interface, and connected to the control means (30) by means of a second connection (10_{b}) managed by a second internal transfer interface independently from said first internal transfer interface.

9. Secure transfer device (1) according to claim 8, **characterized in that** the first transfer means (10) comprises a first exchange means (11), connected to the first processing means (12) by means of said first connection (10ₐ), and capable of receiving the digital data item coming from the first computer system (A) by means of a first external transfer interface, managed independently from said first internal transfer interface.

10. Secure transfer device (1) according to one of claims 8 or 9, **characterized in that** the second transfer means (20) comprises a second processing means (22), connected to the control means (30) by means of a third connection (20_{b}) managed by a third internal transfer interface, and capable of sending the digital data item to the second computer system (B), by means of a fourth connection (20ₐ) managed by a fourth internal transfer interface independently from said third internal transfer interface.

11. Secure transfer device (1) according to claim 10, **characterized in that** the second transfer means (20) comprises moreover a second exchange means (21), connected to the second processing means (22) by means of said fourth connection (20ₐ), and capable of sending the digital data item to the second computer system (B) by means of a second external transfer interface, managed independently from said fourth internal transfer interface.

12. Secure transfer device according to one of claims 8 to 11, **characterized in that** it further comprises at least one connection means (60), connected to said control means (30) and capable of being connected to at least one storage means (61) outside of the transfer device (1), in order to store the digital data item there.

13. Secure transfer device according to one of claims 9 to 12, **characterized in that** it comprises a first switch (41) which enables to select between at least two operating states (R, W), the first operating state (R) being a state in which the first processing means (12) is capable of receiving the data item only from the first exchange means (11) and of transmitting the data item only to the control means (30), and the second operating state (W) being a state in which the first processing means (12) is capable of receiving the data item only from the control means (30) and of transmitting the data item only to the first exchange means (11).

14. Secure transfer device according to one of claims 11 to 13, **characterized in** it comprises a second switch (42) which enables to select between at least two operating states (R', W'), the first operating state (R') being a state in which the second processing means (22) is capable of receiving a data item only from the second exchange means (21) and of transmitting a data item only to the control means (30), and the second operating state (W') being a state in which the second processing means (22) is capable of receiving a data item only from the control means (30) and of transmitting a data item only to the second exchange means (21).

15. Computer program, for the implementation of the method according to one of claims 1 to 7, downloadable via a telecommunications network and/or intended to be stored in a memory of a transfer device and/or stored on a memory medium intended to cooperate with a transfer device.
